# EUROPÄISCHE PATENTSCHRIFT

(11) **EP 0 943 306 B1**
(45) Veröffentlichungstag und Bekanntmachung des Hinweises auf die Patenterteilung: **26.06.2002**
(21) Anmeldenummer: 99104917.2
(22) Anmeldetag: 11.03.1999
(51) Int. Cl.: A61G 13/00, F16M 11/04, F16M 11/42

(54) **Überwachungs- und Versorgungseinrichtung für Patienten**
Monitoring and supply device for patients
Dispositif de surveillance et d'alimentation pour patients

(30) Priorität: 19.03.1998 DE 29805019 U
(43) Veröffentlichungstag der Anmeldung: 22.09.1999
(73) Patentinhaber: TRUMPF Kreuzer Medizin Systeme GmbH & Co. KG, 8218 Puchheim (DE)
(72) Erfinder: Kreuzer, Friedhelm, 81247 München (DE)
(74) Vertreter: Prüfer, Lutz H., Dipl.-Phys.

(56) Entgegenhaltungen:
- US-A- 4 993 683
- US-A- 5 113 897

## Beschreibung

Die Erfindung betrifft eine Überwachungs- und Versorgungseinrichtung für Patienten mit einem Wagen zur Aufnahme von zur Überwachung und Versorgung von Patienten dienenden Geräten, hauptsächlich Überwachungsmonitore, Infusionssysteme, Narkose-Beatmungsgerät, nach dem Oberbegriff des Patentanspruches 1.

Die von dem Wagen zu tragenden Lasten sind erheblich, so daß es nicht einfach ist, den Wagen nicht nur so zu bewegen, daß er an das stationäre Stativ/Versorgungseinheit mechanisch angekoppelt werden kann, sondern auch so, daß das Versorgungsteil und das Versorgungselement zum Verbinden der Versorgungsleitungen miteinander gekoppelt werden.

Aus der US 5,113,897 ist eine Versorgungseinrichtung bekannt, mit einer medizinischen Arbeitsvorrichtung und einem stativartigen Verbindungskopf. Nach deren mechanischen Ankoppeln weren die zugehörigen Versorgungsleitungen miteinander verbunden.

Aufgabe der Erfindung ist es, eine solche Versorgungseinrichtung derart auszubilden, daß die Handhabung wesentlich vereinfacht, bei Notfällen sogar beschleunigt werden kann.

Diese Aufgabe wird durch die in Patentanspruch 1 gekennzeichnete Versorgungseinrichtung gelöst.

Weitere Merkmale und Zweckmäßigkeiten der Erfindung ergeben sich aus der Beschreibung eines Ausführungsbeispieles anhand der Figuren. Von den Figuren zeigen:
Fig. 1 eine schematische Seitenansicht der gesamten stationären Versorgungseinrichtung;
Fig. 2 den mobilen Teil der Versorgungseinrichtung;
Fig. 3 die Versorgungseinrichtung vor dem Ankoppeln der zu verbindenden Teile.

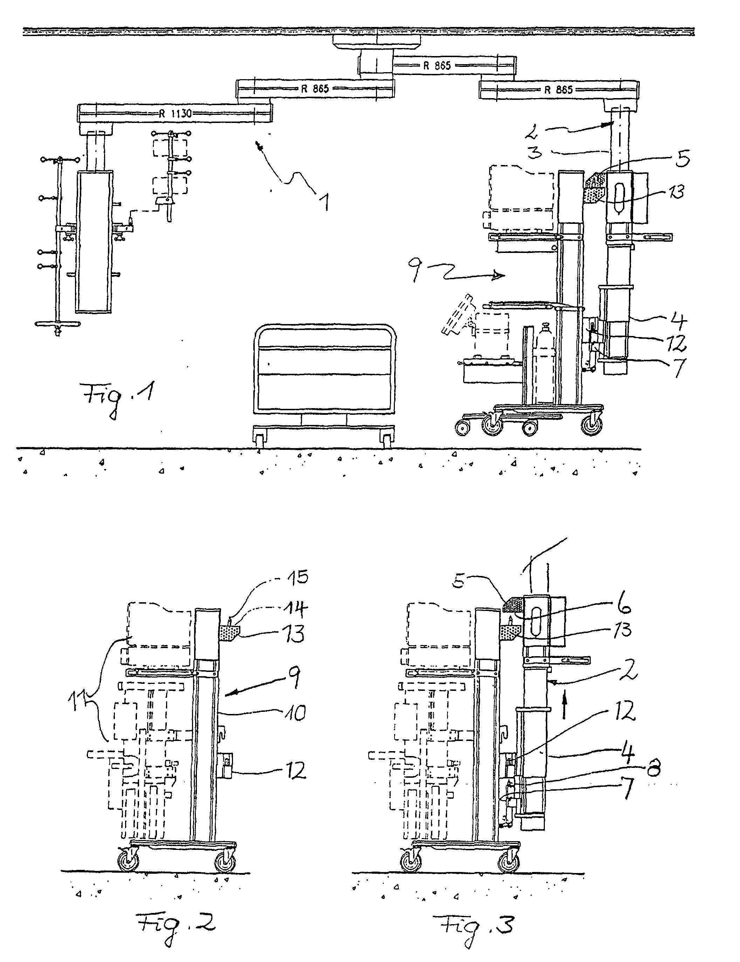

Fig. 1 zeigt ein Deckenstativ 1 mit einer Tragsäule 2. Die Tragsäule weist einen ersten an einem Schwenkarm getragenen Säulenabschnitt 3 und einen einen Stativkopf 4 bildenden zweiten Säulenabschnitt auf. Der Stativkopf ist teleskopartig mit dem ersten Säulenabschnitt 3 verbunden. An dem festen ersten Säulenabschnitt 3 ist ein seitlich nach Art einer Konsole hervorstehendes Versorgungsteil 5 vorgesehen, welches in der am besten aus Fig. 3 ersichtlichen Weise eine sich horizontal erstreckende Kontaktfläche 6 aufweist, die eine Mehrzahl von sich vertikal erstreckenden Buchsen besitzt, die jeweils mit Versorgungsleitungen verbunden sind, die durch den ersten Säulenabschnitt 3 über die Arme in die Zwischendecke und von dort zu zentralen Versorgungs-, Überwachungs-, Datenverarbeitungs-Einrichtungen geführt sind.

An dem höhenmäßig verstellbaren Stativkopf 4 ist, wie am besten aus Fig. 3 ersichtlich ist, eine Ankoppeleinrichtung 7 vorgesehen, die in dem gezeigten Ausführungsbeispiel schematisch angedeutete sich vertikal erstreckende Bolzen 8 zum Tragen des aufzunehmenden Wagens aufweist.

Die Versorgungseinrichtung umfaßt ferner einen am besten in Fig. 2 gezeigten Wagen 9. Dieser weist eine säulenförmige Wand 10 auf, die zur Aufnahme von zu tragenden Geräten 11 dient. Die Wand weist an einer Seite, die derjenigen Seite entgegengesetzt ist, auf der die zu tragenden Geräte angeordnet werden, in einer vorgegebenen Höhe über dem Boden ein Anschlußteil 12 auf, welches nach Art einer Öse und in Anpassung an die konkrete Ausbildung des Bolzens 8 so ausgebildet ist, daß es den sich vertikal erstreckenden Bolzen 8 in der in Fig. 1 gezeigten Weise aufnehmen kann und so eine mechanische tragfähige Verbindung zwischen dem Wagen 9 und der Tragsäule 2 gebildet wird.

In einem Abstand in vertikaler Richtung gesehen oberhalb des Anschlußteiles 12 weist die Rückwand ein Versorgungselement 13 auf, welches in der am besten aus Fig. 3 ersichtlichen Weise so an das Versorgungsteil 5 angepaßt ist, daß es eine sich horizontal erstreckende Oberfläche 14 aufweist, von der schematisch angedeutete Anschlußrohre bzw. Stifte 15 in vertikaler Richtung hervorstehen. Diese Anschlußrohre bzw. Anschlußstifte 15 sind entsprechend den buchsenförmigen Teilen in dem Versorgungsteil 5 entsprechend angeordnet, so daß beim Einstecken der Anschlußrohre bzw. Anschlußstifte des Versorgungselementes 13 in die Buchsen des Versorgungsteiles 5 jeweils versorgungsmäßig zueinander gehörende Leitungen zusammenpassen. Dabei handelt es sich beispielsweise um Sauerstoffleitungen, Lachgasleitungen, Druckluftleitungen, Stromversorgung und Datenverarbeitungsleitungen. Aus der Oberfläche 14 des Versorgungselementes 13 ragen analog den Anschlußstiften 15 diese überragende Bolzen heraus, die beim Einfahren in Bohrungen des Versorgungsteiles 5 für eine genaue Zentrierung der Anschlußstifte in den Anschlußrohren sorgen.

Die höhenmäßige Anordnung des Versorgungselementes 13 ist in der am besten aus Fig. 3 ersichtlichen Weise so vorgenommen, daß das Versorgungselement in einem in vertikaler Richtung gesehenen Abstand unterhalb des Versorgungsteiles liegt, wenn der Wagen auf dem Boden steht. Die höhenmäßige Anordnung der Ankoppeleinrichtung 7 ist relativ zu dem Anschlußteil 12 so gewählt, daß in der am besten aus Fig. 3 ersichtlichen Weise das Anschlußteil 7 unterhalb des Anschlußteiles 12 liegt, wenn der Wagen auf dem Boden steht.

Im Betrieb wird der in Fig. 2 gezeigt Wagen in die in Fig. 3 gezeigt Position an die Tragsäule 2 herangefahren und durch Anschlag vorzentriert. Anschließend wird der Stativkopf 4 aus der in Fig. 3 gezeigten ausgezogenen Stellung in die in Fig. 1 gezeigte eingefahrene Stellung so bewegt, daß die Ankoppeleinrichtung 7 von unten in das Anschlußteil 12 eingreift und damit eine tragfeste Verbindung zwischen dem Wagen und dem Stativ schafft. Gleichzeitig wird durch das Einfahren des Stativkopfes auch die Verbindung zwischen dem Versorgungsteil 5 und dem Versorgungselement 13 hergestellt, indem die beiden ebenen Flächen aufeinander zugeführt, zuerst die hervorstehenden Zentrierbolzen und dann die Anschlußrohre bzw. Anschlußstifte 15 in die zugehörigen Buchsen des Versorgungsteiles 5 nach Art einer Stecker-Buchsen-Verbindung eingeführt werden. Der Wagen wird nunmehr vollständig von dem Stativ getragen.

In umgekehrter Reihenfolge erfolgt die Entkoppelung zwischen Stativ und Wagen. Der Wagen kann dann in bekannter Weise an das Patientenbett oder einen fahrbaren Operationstisch angekoppelt und mit diesen verfahren werden.

## Patentansprüche

1. Versorgungseinrichtung für Patienten,
mit einem Versorgungsstativ (1) und einem Wagen (9) zur Aufnahme von zur Überwachung und Versorgung von Patienten dienenden Geräten (11),
wobei der Wagen ein Anschlußteil (12) aufweist, und
das Versorgungsstativ eine Ankoppeleinrichtung (7), ein Versorgungsteil (5) mit Zuführungen von Versorgungsleitungen, einen ersten Abschnitt (3) und einen dazu höhenmäßig relativ verstellbaren zweiten Abschnitt (4) aufweist, wobei an dem einen Abschnitt (4) die Ankoppeleinrichtung (7) und an dem anderen Abschnitt (3) das Versorgungsteil (5) angeordnet sind,
**dadurch gekennzeichnet, daß**
der Wagen (9) ein Versorgungselement (13) zum Verbinden der Geräte (11) mit den zugehörigen Versorgungsleitungen aufweist und das Versorgungsteil (5) und das Versorgungselement (13) so ausgebildet sind, daß die Verbindung der Versorgungsleitung durch Einführen von am Versorgungsteil bzw. Versorgungselement angebrachten Anschlußrohren bzw. Anschlußstiften (15) in zugehörige Buchsen am entsprechend anderen Versorgungselement bzw. Versorgungsteil nach Art einer Stecker-Buchsen-Verbindung erfolgt, und das Anschlußteil (12) zum wahlweisen Ankoppeln an ein Patientenbett oder an das Vermorgungsstativ (1) dient.

2. Versorgungseinrichtung für Patienten nach Anspruch 1, **dadurch gekennzeichnet, daß**
der Wagen (9) eine sich vertikal erstreckende Säule (10) bzw. Wand aufweist, an der in einem vertikalen Abstand voneinander das Versorgungselement (13) und das Anschlußteil (12) angeordnet sind.

3. Versorgungseinrichtung für Patienten nach Anspruch 1 oder 2,
**dadurch gekennzeichnet, daß**
die Ankoppeleinrichtung (7) an einem Stativkopf (4) des Versorgungsstativs (1) und das Versorgungsteil (5) an dem anderen Abschnitt (3) vorgesehen sind.

## Claims

1. Supply device for patients, with a supply mounting (1) and a carriage (9) for holding appliances (11) used for monitoring and supplying patients, said carriage having an attachment part (12), and the supply mounting having a coupling device (7), a supply part (5) with admissions for supply lines, a first section (3) and a second section (4) which can be displaced vertically relative to the latter, the coupling device (7) being arranged on the one section (4) and the supply part (5) being arranged on the other section (3), **characterized in that** the carriage (9) has a supply element (13) for connecting the appliances (11) to the associated supply lines, and the supply part (5) and the supply element (13) are designed in such a way that the connection of the supply line is effected in the manner of a plug- and-socket connection by inserting attachment tubes or attachment pins (15) arranged on the supply part or supply element into associated sockets on the respective other supply element or supply part, and the attachment part (12) is used for alternate coupling to a patient's bed or to the supply mounting (1).

2. Supply device for patients according to Claim 1, **characterized in that** the carriage (9) has a vertically extending column (10) or wall on which the supply element (13) and the attachment part (12) are arranged at a vertical distance from one another.

3. Supply device for patients according to Claim 1 or 2, **characterized in that** the coupling device (7) is provided on a mounting head (4) of the supply mounting (1), and the supply part (5) is provided on the other section (3).

## Revendications

1. Dispositif d'alimentation pour patients avec un support d'alimentation (1) et un chariot (9) recevant les appareils (11) servant à la surveillance et à l'alimentation de patients, dans lequel le chariot présente une partie de raccordement (12) et le support d'alimentation présente un dispositif de couplage (7), une partie d'alimentation (5) avec des arrivées de lignes d'alimentation, une première partie (3) et une deuxième partie (4) mobile en hauteur par rapport à celle-ci, le dispositif de couplage (7) étant disposé sur une partie (4) et la partie d'alimentation (5) sur l'autre partie (3), **caractérisé en ce que** le chariot (9) présente un élément d'alimentation (13) pour le raccordement des appareils (11) à la ligne d'alimentation correspondante, et la partie d'alimentation (5) et l'élément d'alimentation (13) sont conformés de telle sorte que le raccordement de la ligne d'alimentation est réalisé par introduction de tuyaux ou broches de raccordement (15) disposés sur la partie d'alimentation ou l'élément d'alimentation dans des prises femelles correspondantes de l'autre élément d'alimentation correspondant ou de l'autre partie d'alimentation selon le principe d'une connexion mâle-femelle, et la partie de raccordement (12) sert au couplage soit sur un lit de patient, soit sur le support d'alimentation (1).

2. Dispositif d'alimentation pour patients selon la revendication 1, **caractérisé en ce que** le chariot (9) présente une colonne (10) ou paroi s'étendant verticalement, sur laquelle sont disposés, à distance l'un de l'autre dans le sens vertical, l'élément d'alimentation (13) et la partie de raccordement (12).

3. Dispositif d'alimentation pour patients selon la revendication 1 ou 2, **caractérisé en ce que** le dispositif de couplage (7) est disposé sur une tète de support (4) du support d'alimentation (1) et la partie d'alimentation (5) est disposée sur l'autre partie (3).
